Europäisches Patentamt

European Patent Office

Office européen des brevets

(11) Publication number: **0 030 091**
**B1**

# EUROPEAN PATENT SPECIFICATION

(45) Date of publication of patent specification: **26.02.86**  (51) Int. Cl.⁴: **F 16 L 9/12**

(21) Application number: **80304008.8**

(22) Date of filing: **10.11.80**

(54) Gaseous diffusion resistant article.

(30) Priority: **28.11.79 GB 7941044**

(43) Date of publication of application:
**10.06.81 Bulletin 81/23**

(45) Publication of the grant of the patent:
**26.02.86 Bulletin 86/09**

(84) Designated Contracting States:
**AT BE CH DE FR GB IT LI LU NL SE**

(56) References cited:
**DE-A-2 236 375**
**GB-A- 897 222**
**US-A-3 561 493**
**US-A-3 854 504**

(73) Proprietor: **WIRSBO BRUKS AKTIEBOLAG**
**S-730 61 Virsbo (SE)**

(72) Inventor: **Skarelius, Jerker**
**Allevagen 9**
**731 60 Virsbo (SE)**

(74) Representative: **Evans, David Charles et al**
**F.J. CLEVELAND & COMPANY 40-43, Chancery Lane**
**London, WC2A 1JQ (GB)**

Courier Press, Leamington Spa, England.

## Description

The present invention relates to a gaseous diffusion resistant tube comprising a core of a liquid-resistant plastics material and an outer layer of a plastics impact-resistant material. Particularly it relates to such an arrangement for use in hot liquid transfer pipes such as those utilized in central heating systems.

Plastics pipes, particularly those of cross-linked polyethylene are widely used for the transfer of hot liquids; particularly heat transfer liquids for use in central heating systems. At the temperatures at which the central heating systems operate, oxygen from the air particularly, diffuses from the exterior of said pipe into the water or other heat exchange liquid in the pipe. The oxygen borne by the liquid in the pipe contacts exposed metal surfaces in the system and tends to oxidise the same particularly to rust. Particles of rust and other oxidised metals then become detached and are transferred, suspended in the heat exchange liquid, to a constriction or other obstruction where they are deposited and can eventually cause blockages. Thus, it is generally desirable to provide oxygen diffusion resistant tubes for use in central heating systems, but for various reasons those currently available are not wholly satisfactory.

It is known, for example from British Patent No: 1,175,005, to provide a two-layer gaseous diffusion resistant tube made, for example, from polyethylene and nylon. Such an arrangement is not suitable for central heating installations however because of its linear expansion during heat cycling. Where the polyethylene is cross-linked to provide suitable dimensional stability said oxygen resistant nylon coating overlying the same cannot be used successfully because its coefficient of linear expansion is so different from that of the cross-linked polyethylene tube.

Similarly, it has been proposed, for example in British Patent No: 1,171,122 to provide a gaseous diffusion resistant tube having an intermediate layer of a metallic foil which both reinforces the tube and prevents gaseous diffusion. Such assemblies are difficult and hence expensive to produce mainly because of the difficulty of bonding the exterior and interior plastics layers to the foil. Further the installation of such tubes is difficult because of their inherent rigidity and because plastics end fittings utilized in central heating systems are not generally suitable for use with pipes including a metal insert.

Additionally, U.S. Patent, 3,561,493 discloses a composite three-layer or five-layer tube, the materials for which can be selected inter-alia from polyolefins, polyvinylalcohol and polyvinylchloride. Intermediate layer (or layers) are provided, i.e. the middle layer of the three-layer tube and the second and fourth layers of the five-layer tube, which are formed of a physical blend of the two adjacent materials. Accordingly, any properties of the adjacent layer(s) are substantially lost in the intermediate layers by virtue of the physical blending; the intermediate layer(s) having the minimum properties of both materials. Such arrangements are of little use for heat exchange fluid conduits.

The present invention seeks to provide, therefore, a flexible gaseous diffusion resistant tube which is usable under heat cycling conditions, which can be co-extruded, and is easy to instal.

According to the present invention, therefore, there is provided a layered polymeric tube suitable for use in a central heating system, which comprises a tubular core of a liquid resistant polymeric material,

an outer tubular layer of a polymeric impact resistant material, both said polymeric materials being selected to have at least substantially similar coefficients of linear expansion,

an intermediate tubular layer of a further material,

said materials being formed into an integral coaxial array; characterized in that the intermediate layer material comprises a single gaseous diffusion resistant substance which is of slight elasticity, and adheres to each said polymeric material layer, and in that the single substance provides a continuous intermediate layer.

The core and/or the outer layer may be made of a cross-linked polyolefinic material such as cross-linked polyethylene which much improves the dimensional stability of the tube at elevated temperatures. Materials for the intermediate layer such as polyvinylalcohol (PVAL) are particularly useful in the practice of this invention, but are not, in themselves, impact-resistant and hence must be protected by an impact resistant layer. The impact-resistant layer in such circumstances need have no diffusion resistant qualities and hence, if intrinsically strong, may be applied as a comparatively thin layer.

Polyethylene in linear or cross-linked polymeric form is an example of such an impact-resistant layer. Another example of a particularly desirable gaseous diffusion resistant material is polyacrylonitrile (PAN). Other materials which may be used as the impact-resistant layer include copolymers of acrylonitrile and thermoplastics polyesters, polyamides or chlorinated PVC.

The particular gaseous diffusion resistant layer for incorporation with the plastics material of the core will in general be selected dependent upon the atmosphere in which the eventual pipe is to be used. Thus, in a normal central heating system it is most important to prevent the diffusion of oxygen into the heat exchange liquid. However, in certain laboratory applications the gaseous diffusion resistant material is selected to inhibit the diffusion of halogens such as chlorine or other organic gases.

Where possible it is desirable to coaxially coextrude sequentially the core, the diffusion-resistant layer, and the impact-resistant layer. In some applications it is convenient to utilize the same material, e.g: cross-linked polyethylene as both the impact resistant layer and the core. This ensures that the coefficient of linear expansion of the core and the outer layer are similar; where PVAL for example is used as the intermediate layer its slight elasticity compensates for its slightly different coefficient of linear expansion.

The intermediate layer may have a thickness between 60 µm and 10 µm.

Some embodiments of the invention will now be described by way of illustration only and with reference to the following examples and drawings.

In the accompanying drawings:—

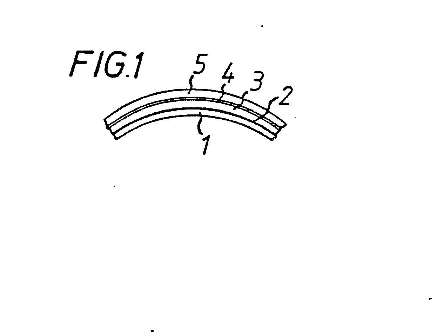

Figure 1 represents a diagrammatic cross-section through a segment of oxygen diffusion resistant tube of the invention.

Figure 1 shows a cross-linked polyethylene (PEX) tube 1 fused to an oxygen diffusion resistant layer of PVAL 3 which in turn is fused to an impact resistant layer of linear polyethylene *per se* 5. Numerals 2 and 4 each denote an adhesive interface.

Where the materials forming layers 3 and 5 cannot be coextruded with the tube 1 they may be applied by spraying, dipping or wrapping as required. The thickness of the layer 3 should be such as to reduce oxygen diffusion by at least 1/5th of that of the core material, and it is preferred that the thickness of the layer 3 is between 1/100 and 1/10 of the wall thickness of the core.

By way of this example, the following layers were all applied to samples of a PEX tube. Said tube had an outer diameter of 20 mm and an inner wall thickness of 2 mm. Each sample was tested for oxygen diffusion against a similar control sample which had either no coating thereon or only a thin coating of an adhesive with no oxygen diffusion resistant capabilities.

The results are set forth in the following table:

## TABLE 1
Impact and oxygen diffusion resistant samples with and without separate impact resistant layer.

| Material of transfer pipe | Oxygen resistant layer | Separate impact resistant layer | Comparative diffusion characteristics |
|---|---|---|---|
| 1) 2mm PEX | 20 µm PVAL | 0.3 mm PE | <1/5th control |
| 2) 2mm PEX | 20 µm PAN | 0.3 mm PE | <1/5th control |
| 3) 2mm PEX | 40 µm PVAL | 0.3 mm PE | <1/10th control |
| 4) 2mm PEX | 40µm PAN copolymer Bazex (RTM) | 0.3 mm PE | <1/10th control |
| 5) 2mm PEX | 40 µm Chlorinated PVC. | 0.3 mm PE | <1/5th control |

It can thus be seen that particularly advantageous results can be achieved with a layer 40 µm thick of PVAL or PAN over a PEX tube. This will reduce oxygen diffusion to less than 1/10th of the diffusion expected through a PEX tube with a 2 mm wall thickness and an other diameter of 20 mm.

The use of tubes made in accord with the invention has been found in practice to considerably reduce the instance of corrosion in central heating systems and this leads to a reduction in the required servicing frequencies.

Because the diffusion resistant layers can be formed during the production of normal PEX tubes, tubes according to the invention can be produced for much the same cost as that of ordinary PEX tubes. Consequently, oxygen diffusion resistant pipes can be utilized in the installation of central heating systems without a significant extra cost and with material long term benefits. It will also be appreciated that the comparatively thin non-structural oxygen diffusion resistant layer allows of a greater flexibility than with metal foil oxygen diffusion resistant layers and allows a close match of coefficients of linear expansion by virtue of the slight elasticity of said oxygen diffusion resistant layer.

Tubes of this invention have a materially improved long term structural integrity when utilized in central heating installations.

**Claims**

1. A layered polymeric tube suitable for use in a central heating system, which comprises a tubular core (1) of a liquid resistant polymeric material,

an outer tubular layer (5) of a polymeric impact resistant material, both said polymeric materials being selected to have at least substantially similar coefficients of linear expansion,

an intermediate tubular layer (3) of a further material,

# 0 030 091

said materials being formed into an integral coaxial array; characterized in that the intermediate layer material comprises a single gaseous diffusion resistant substance which is of slight elasticity, and which adheres to each said core and outer polymeric material layer (1, 5), and in that the single substance provides a continuous intermediate layer.

2. A tube according to claim 1 wherein the core (1) at least is made of a cross-linked polyolefinic material.

3. A tube according to claim 2 wherein the outer layer (5) is also made of a cross-linked polyolefinic material.

4. A tube according to claim 3 wherein the cross-linked polyolefinic material is cross-linked polyethylene.

5. A tube according to any preceding claim wherein the intermediate layer (3) is selected from polyvinylalcohol, polyacrylonitrile or polyvinyl chloride.

6. A tube according to any preceding claim wherein the intermediate layer has a thickness between 60 µm and 10 µm.

7. A central heating system incorporating a tube claimed in any one of claims 1 to 6.

**Patentansprüche**

1. Mehrschichtiges Polymerrohr zur Verwendung in Zentralheizungssystemen mit

— einem rohrförmigen Kern (1) aus einem flüssigkeitsbeständigen Polymer,
— einer äußeren rohrförmigen Schicht (5) aus einem schlagfesten Polymer, wobei beide Polymere zumindest praktisch gleiche Längenausdehnungskoeffizienten aufweisen,
— einer rohrförmigen Zwischenschicht (3) aus einem weiteren Material, wobei die Polymere in einer im wesentlichen koaxialen Ordnung ausgerichtet werden, dadurch gekennzeichnet,

daß das Zwischenschichtmaterial eine einzige gasundurchlässige Substanz mit geringer Elastizität ist, die sowohl an dem Kernpolymer (1) als auch an der äußeren Polymerschicht (5) haftet und eine kontinuierliche Zwischenschicht bildet.

2. Rohr nach Anspruch 1, dadurch gekennzeichnet, daß mindestens der Kern (1) aus einem vernetzten Polyolefin ist.

3. Rohr nach Anspruch 2, dadurch gekennzeichnet, daß die äußere Schicht (5) auch aus einem vernetzten Polyolefin ist.

4. Rohr nach Anspruch 3, dadurch gekennzeichnet, daß das vernetzte Polyolefin vernetztes Polyethylen ist.

5. Rohr nach einem der vorhergehenden Ansprüche, dadurch gekennzeichnet, daß die Zwischenschicht (3) aus Polyvinylalkohol, Polyacrylnitril oder Polyvinylchlorid ausgewählt wird.

6. Rohr nach einem der vorhergehednen Ansprüche, dadurch gekennzeichnet, daß die Zwischenschicht eine Dicke von 60—10 µm hat.

7. Zentralheizungssystem mit einem Rohr gemäß einem der Ansprüche 1 bis 6.

**Revendications**

1. Tube polymère en couche convenant pour l'utilisation dans un système de chauffage central, qui comprend une âme tubulaire (1) d'une matière polymère résistant au liquide,

— une couche tubulaire externe (5) d'une matière polymère résistant aux chocs, ces deux matières polymères étant choisies pour avoir des coefficients de dilatation linéaire pratiquement similaires,
— une couche tubulaire intermédiarè (3) d'une autre matiére, ces matières étant amenées dans une disposition coaxiale intégrale, caractérisée en ce que la matière de la couche intermédiaire comprend une substance résistante à la diffusion gazeuse qui a une légère élasticité, et qui adhère à chacune de ces couches de matière polymère de l'âme et extérieur (1,5), et en ce que la substance unique constitue une couche intermédiaire continue.

2. Tube suivant la revendication 1 dans lequel l'âme (1) au moins est constituée d'une matière polyoléphinique-réticulée.

3. Tube suivant la revendication 2 dans lequel la couche extérieure (5) est également constituée d'une matière polyoléfinique réticulée.

4. Tube suivant la revendication 3, dans lequel la matière polyoléfinique est du polyéthylène réticulé.

5. Tube suivant l'une quelconque des revendications précédentes, dans lequel la couche intermédiaire (3) est choisie parmi l'alcool polyvinylique, le polyacrinolitrile ou le chlorure de polyvinyle.

6. Tube suivant l'une quelconque des revendications précédentes, dans lequel la couche intermédiaire a une épaisseur entre 60 µm et 10 µm.

7. Système de chauffage central comprenant un tube suivant l'une quelconque des revendications 1 à 6.

FIG.1

5 4 3 2

1

1